# EUROPÄISCHE PATENTSCHRIFT

(11) **EP 1 417 884 B1**
(45) Veröffentlichungstag und Bekanntmachung des Hinweises auf die Patenterteilung: **06.09.2006**
(21) Anmeldenummer: 03025589.7
(22) Anmeldetag: 08.11.2003
(51) Int. Cl.: A01K 63/04, B01D 21/00, B01D 21/24

(54) **Filter für die Haltung von Fischen jeder Art in verschiedenen Haltungsanlagen**
Filter for rearing all kind of fishes in different rearing plants
Filtre pour l'élevage de tout type de poissons dans différentes installations d'élevage

(30) Priorität: 08.11.2002 DE 10252558
(43) Veröffentlichungstag der Anmeldung: 12.05.2004
(73) Patentinhaber: Uentz, Marco, 03044 Cottbus (DE)
(72) Erfinder: Uentz, Marco, 03044 Cottbus (DE)
(74) Vertreter: Haschick, Gerald

(56) Entgegenhaltungen:
- DE-A- 4 119 154
- DE-U- 29 905 996
- FR-A- 813 048
- FR-A- 2 749 780

## Beschreibung

Die Erfindung betrifft einen Filter für die Haltung von Fischen jeder Art in verschiedenen Haltungsanlagen, wobei erreicht wird, dass insbesondere die gegebenen Schlammreste, bestehend aus Kot und anderen Fäulnispartikeln, in einfacher Art und Weise aus dem jeweiligen Filter entfernt werden.

Bekannt sind mehrstufige Filter, die nach dem Prinzip der Schwerkraft arbeiten oder von Pumpen gespeist sind. Die Filter nach dem Stand der Technik verfügen über mehrere aufeinander folgende, mechanische oder biologische Stufen, welche durch entsprechende Filtermaterialien ausgezeichnet sind. Nachteilig an diesen bekannten Filtern ist insbesondere die Gegebenheit, dass der vorhandene Schlammrest, bestehend aus Kot oder anderen Fäulnispartikeln, nicht über die Filtermaterialien und die stufenweise Filterung des Wassers ausgefiltert wird, womit nachfolgend Bakterien, welche Auslöser von Fischkrankheiten sind, durch den Schlammrest wiederum in der jeweiligen Haltungsanlage eingeführt werden, was Krankheiten bzw. Fischsterben zur Folge hat. Des Weiteren ist ein Gebrauchsmuster DE 299 05 996 "Filter für mit Fischen besetzte Wasserbecken" bekannt. Dabei wird ein Filter aus mehreren mechanischen bzw. biologischen Filterstufen eingesetzt, welcher insbesondere aus Edelstahl gefertigt ist. Des Weiteren ist eine jeweilige Trennwand bei einem Überlauf gegeben, damit in jedem Fall ein Durchlauf des zu filternden Wassers durch die gegebene Filterstufe erfolgen kann. Nachteilig ist hierbei, dass insbesondere die schon beschriebenen Schmutzablagerungen auf Grundlage von Kot und anderen Fäulnispartikeln nicht gesondert ausgeführt werden und somit diese Krankheitserreger in das nachfolgend angeschlossene Wasserbecken eindringen.

Des Weiteren sind bekannt die Schriften FR 813.048 und FR 2 749 780, wobei zwei Filteranlagen für die Reinigung von Wasser beschrieben werden, die insbesondere so ausgeführt sind, dass sie für Großwasseranlagen installiert sind und einen Zwischenbehälter aufweisen, worin eine entsprechende Trennwand oder ein Gitterrost vorhanden sind.

Ziel der Erfindung ist es, einen Filter für die Haltung von Fischen jeder Art in verschiedenen Haltungsanlagen zu finden, welcher mit einer einfachen Methode gewährleistet, dass jegliche Schadstoffe, insbesondere Kot und andere Fäulnispartikel, aus dem zu filternden Wasser herausgelöst werden.

Aufgabe der Erfindung ist es, einen Filter für die Haltung von Fischen jeder Art in verschiedenen Haltungsanlagen zu finden, wobei die Nachteile des Standes der Technik unterbunden werden und ein Eindringen von Schlammresten, bestehend aus Kot oder Fäulnispartikeln, welche als Ursache für die Bildung von Bakterien und als Auslöser von Fischkrankheiten wissenschaftlich erwiesen sind, in die nachfolgende Haltungsanlage verhindern.

Die Aufgabe wird erfindungsgemäß dadurch gelöst, dass ein Filter für die Haltung von Fischen jeder Art in verschiedenen Haltungsanlagen nach Patentanspruch 1 und seinen Unteransprüchen realisiert wird, wobei innerhalb des Filters eine steilwandige Sammelkammer gegeben ist. Diese steilwandige Sammelkammer setzt sich zusammen aus einer Sammelkammer und einer Trennwandsammelkammer. In der Sammelkammer ist ein gegebener Bodenauslass vorhanden. Dieser Bodenauslass wird über ein Ventil und einen Abfluss realisiert. Ein entsprechender Wasserzulauf wird in die Trennwandsammelkammer geleitet. Nachfolgend wird über ein bestehender Gitterrost unterhalb des Filters das eingeleitete Wasser in die Sammelkammer geführt. In dieser Sammelkammer können sich nun die entsprechenden Schlammreste, bestehend aus Kot und anderen Fäulnispartikeln, ablagern. Das vorhandene, zu filternde Wasser wird weiter hindurch durch den Gitterrost in das entsprechend eingelagerte Filtermaterial geführt. Oberhalb des Filters wird ein Überlauf angeordnet, womit das gefilterte Wasser entweder in eine angeschlossene Haltungsanlage eingeleitet wird oder an ein zusätzliches Modul gleicher Bauweise. An dem Gitterrost, welcher die steilwandige Sammelkammer trennt, im unteren Bereich des Filters ist mittig nach unten ausgerichtet eine Druckdüse gegeben. Diese Druckdüse ist so ausgeführt, dass eine beidseitige Wasserspülung an der Wandung der Sammelkammer realisiert ist. Auf Grundlage dieser Spülung werden die abgelagerten Schlammreste, bestehend aus Kot und anderen Fäulnispartikeln, gelöst. Die Druckdüse ist mit einem normalen Wasseranschluss verbunden und wird über ein gegebenes Sperrventil betätigt. Über den vorhandenen Bodenauslass, das Ventil und den Abfluss werden nun die gelösten Verschmutzungen entleert, womit die Schlammreste, bestehend aus Kot und anderen Fäulnispartikeln, aus dem Filter entfernt werden. Die Wände der steilwandigen Sammelkammer, bestehend aus der Trennwandsammelkammer und der Sammelkammer, sind aus einem hochpolierten Material. Auf dem Gitterrost, welcher im unteren Bereich des Filters die jeweilige steilwandige Sammelkammer trennt, ist dann nachfolgend ein vorgegebenes Filtermaterial je nach Anwendungsbereich gegeben. Auf Grundlage der Modulbauweise des beschriebenen Filters ist es nun möglich, entsprechende Zusatzmodule an einem gegebenen Filter anzuordnen. Dabei wird ein Zulauf mit einem Überlauf eines jeweiligen anderen Filters verbunden. Grundsätzlich kann davon ausgegangen werden, dass in einem jeweiligen Modul einer Filteranlage ebenfalls eine Anordnung des Gitterrostes mit entsprechender Düse und Anschluss an eine separate Wasserzuleitung gegeben ist und somit in jedem Filtermodul eine Entsorgung der jeweiligen Schlammreste, bestehend aus Kot und anderen Fäulnispartikeln, zu gewährleisten. Die Vorteile der Erfindung liegen darin begründet, dass den auftretenden Krankheitserregern bei Fischen vorbeugend entgegen getreten wird. Es' ist wissenschaftlich bewiesen, dass sich Bakterien verschiedener Art, welche Auslöser von Fischkrankheiten sind, in den Schlammresten, bestehend aus Kot und anderen Fäulnispartikeln, vermehren und somit zur Fischsterberate beitragen. Auf Grundlage dieser besonderen Anordnung des beschriebenen Filters wird gerade dieser gegebene Schlammrest, bestehend aus Kot und anderen Fäulnispartikeln, in jedem Filtermodul entsorgt und somit ein wesentlicher Beitrag der Verringerung des Fischsterbens gewährleistet.

Die Erfindung wird nachfolgend an einem Ausführungsbeispiel beschrieben, wobei zwei Zeichnungen gegeben sind, welche Folgendes aufweisen:
- Figur 1: Filter
- Figur 2: Modulbauweise Filter

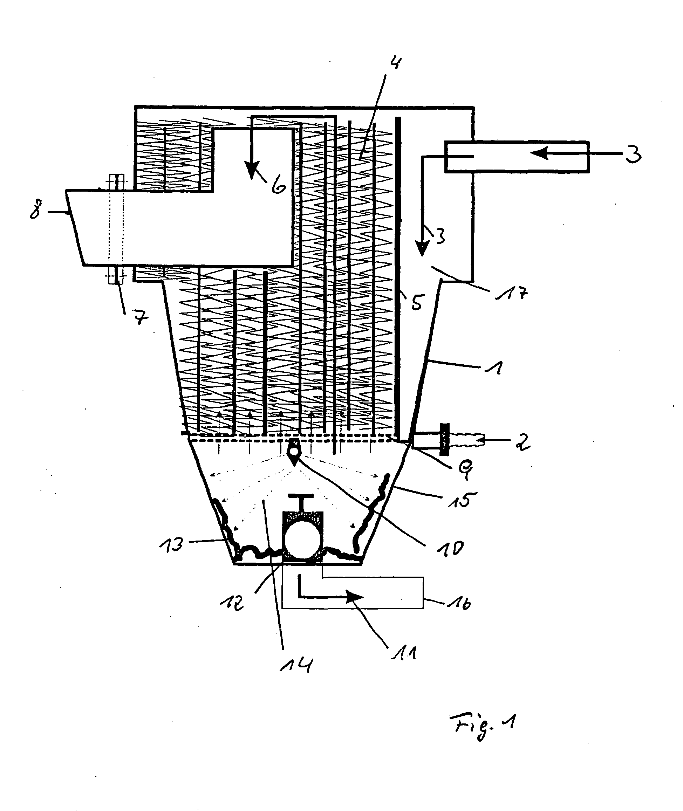

Figur 1 zeigt einen Filter 1, welcher als Einzelmodul dargestellt ist. Dabei ist wesentlich, dass ein Gitterrost 9, eine steilwandige Sammelkammer, bestehend aus einer Trennwandsammelkammer 17 und einer Sammelkammer 15, im unteren Bereich des Filters 1 trennt. Im tiefsten Bereich der Sammelkammer 15 des Filters 1 ist ein Bodenauslass über ein Ventil 12 und einem Ausfluss 11 gegeben. Im oberen Bereich der Trennwandsammelkammer 17 ist ein Wasserzulauf 3 vorhanden. Die jeweiligen Wandungen der steilwandigen Sammelkammer sind aus einem hochpolierten Material, um eine Nichtablagerung etwaiger Verschmutzungen zu gewährleisten. Die Trennwand 5 der Trennwandsammelkammer 17 ist vom oberen Bereich des Filters 1 bis hin zum Gitterrost 9 in der steilwandigen Sammelkammer konstruktiv angeordnet. Ein zu filterndes Wasser einer angeschlossenen Haltungsanlage von Fischen wird nun über den Wasserzulauf 3, die Trennwandsammelkammer 17, die Sammelkammer 15, durch den Gitterrost 9 und das Filtermaterial 4 hin zum Überlauf 8 hindurch geleitet. Dabei kann je nach Anwendungsbereich ein Filtermaterial 4 gegeben sein. Wesentlich ist dabei, dass sich in der Sammelkammer 15 entsprechende Schlammreste 13, bestehend aus Kot und anderen Fäulnispartikeln, zurücklagern. An dem Gitterrost 9 ist mittig nach unten ausgerichtet eine Druckdüse 10 angeordnet, welche eine komplette Ausspülung des Wandbereiches der Sammelkammer 15 gewährleistet. An der Druckdüse 10 ist ein Wasserzufluss 2 mit einem entsprechenden Ventil angeschlossen. Dieser Reinigungsvorgang zur Entfernung der gegebenen Schlammreste 13 wird nach Entleerung des Filters 1 durchgeführt. Ist der Entleerungsvorgang des Filters 1 mit dem zu filternden Wasser beendet, so wird über ein entsprechendes Ventil und den Wasserzufluss 2 die Druckdüse 10, welche mittig nach unten ausgerichtet an dem Gitterrost 9 angeordnet ist, betätigt. Diese Druckdüse 10 gewährleistet, dass die entsprechenden Schlammreste 13 im inneren Bereich der Sammelkammer 15 gelöst werden und über ein Ventil 12 und den Abfluss 11 entfernt werden können. Nach Ausdüsung der Sammelkammer 15 wird nachfolgend die Befüllung des Filters 1 mit dem zu filternden Wasser aus den angeschlossenen Modulen bzw. Haltungsanlagen durchgeführt. Ein jeder einzelner Filter ist so konzipiert, dass durch die bestehende Trennwand 5 das zulaufende Wasser über den Wasserzulauf 3, über die Sammelkammer 15 durch die einzelnen individuellen Filtermedien zum Überlauf 8 durchgeleitet wird. Jede einzelne Modulkammer des Filters 1 kann je nach Filtermenge und Filterbesatz mit verschiedenen Filtermedien bestückt werden, welche handelsüblich bekannt sind, wie Bürsten, Japen-Matten, Tonarten, Keramikfilter usw.

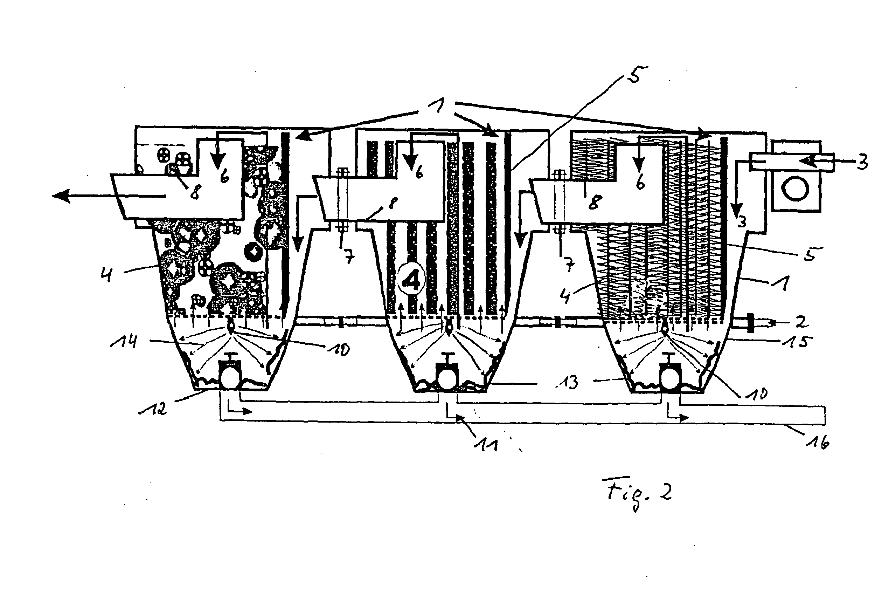

Die Figur 2 zeigt eine Besonderheit der Anordnung des Filters 1 in Art einer Modulbauweise. Jedes Modul, bestehend aus einem Filter 1, kann unkompliziert je nach Anforderung von Wassermenge und notwendigem Filtervolumen zu mehreren Einheiten verkoppelt werden. Selbst bei Erhöhung von Wassermengen oder Fischbesatz ist es jederzeit möglich, ein erweitertes Modul anzudocken. Die Entsorgung der Schlammreste 13 im Bereich der Sammelkammer 15 wird über ein Rohrsystem mit einem handelsüblichen Pumpenschacht verbunden. Die einzelnen Filtermodule werden einfach mit entsprechender Flanschverbindung 7 des Wasserzulaufes 3 und des Überlaufes 8 ausgeführt. Somit kann gegeben sein, dass in jedem jeweiligen Filtermodul 1 eine entsprechende handelsübliche Filterung mit anderem Filtermaterial 4 ausgeführt werden kann. Wie aus der Figur 2 ersichtlich, wird in jedem einzelnen Filter 1 der Modulbauweise die Säuberung der Sammelkammer 15 über die Druckdüse 10 und den Bodenauslass gewährleistet. Auf Grundlage dieser konstruktiven Eigenschaften sind- die erfindungswesentlichen Vorteile insbesondere darin gegeben, dass somit erwirkt wird, dass sämtliche Schlammreste, bestehend aus Kot und anderen Fäulnispartikeln, aus dem zu filternden Wasser entsorgt werden. Der Prozess der Entleerung der jeweiligen Filter 1 mit dem zu filternden Wasser und der nachfolgenden Säuberung der Sammelkammer 15 mit den beinhalteten Schlammresten 13 sollte je nach Empfindlichkeit der Fischart einmal wöchentlich realisiert werden. Die vorhandenen Schlammreste 13, welche über den Bodenauslass mit dem Ventil 12 und dem Abfluss 11 entfernt werden, werden nachfolgend an einen bestehenden Pumpenschacht bzw. ein Rohrsystem entsorgt.

### Bezugszeichen

- 1: Filter
- 2: Wasserzufluss
- 3: Wasserzulauf
- 4: Filtermaterial
- 5: Trennwand
- 6: Ausfluss
- 7: Flanschverbindung
- 8: Überlauf
- 9: Gitterrost
- 10: Druckdüse
- 11: Abfluss
- 12: Sperrventil
- 13: Schlammreste
- 14: Wasserspülung
- 15: Sammelkammer
- 16: Abfluss
- 17: Trennwandsammelkammer

## Patentansprüche

1. Filter für die Haltung von Fischen jeder Art in verschiedenen Haltungsanlagen, wobei der Filter (1) eine steilwandige Sammelkammer (15) mit einem Bodenauslass aufweist, **dadurch gekennzeichnet, dass** ein Gitterrost (9) die steilwandige Sammelkammer (15) im unteren Bereich des Filters (1) trennt, dass mittig eine Druckdüse (10) an dem Gitterrost (9) nach unten ausgerichtet ist und die Sammelkammer (15) hochpoliert ausgefertigt ist, wobei der Filter (1) ein Filtermodul darstellt und beliebig viele Module aus dem Filter (1) zusammengesetzt werden können.

2. Filter nach Anspruch 1 **dadurch gekennzeichnet, dass** die Druckdüse (10) beidseitig eine gesamte Wasserspülung (14) der Sammelkammer (15) realisiert und somit die Schlammreste (13) ablöst.

3. Filter nach den Ansprüchen 1 und 2 **dadurch gekennzeichnet, dass** die Druckdüse (10) mit einem Wasserzufluss (2) verbunden ist und über ein gegebenes Sperrventil betätigt wird.

4. Filter nach Anspruch 2 **dadurch gekennzeichnet, dass** eine Entleerung der Sammelkammer (15) mit den abgelösten Schlammresten (13) über den Bodenauslass des Sperrventils (12) und des Abflusses (16) gegeben ist.

5. Filter nach Anspruch 1 **dadurch gekennzeichnet, dass** die steilwandige Sammelkammer sich aus einer Trennwandsammelkammer (17) und einer nachfolgend angeordneten Sammelkammer (15) getrennt durch das Gitterrost (9) im Filter (1) zusammensetzt.

6. Filter nach den Ansprüchen 1 und 5 **dadurch gekennzeichnet, dass** in der Trennwandsammelkammer (17) eine Trennwand (5) gegeben ist, welche von oben des Filters (1) bis zum Gitterrost (9) ausgeführt ist.

7. Filter nach den Ansprüchen 1, 5 und 6 **dadurch gekennzeichnet, dass** die Wände der Trennwandsammelkammer (17) und der Trennwand (5) hochpoliert ausgeführt sind.

8. Filter nach Anspruch 1 **dadurch gekennzeichnet, dass** bei einer Modulbauweise eine Flanschverbindung (7), ein Wasserzulauf (3) und ein Überlauf (8) die Verbindung der Modulbausteine des Filters (1) darstellt.

9. Filter nach Anspruch 1 **dadurch gekennzeichnet, dass** über einen Wasserzufluss (2) die jeweilige Druckdüse (10) eines jeweiligen Modulbausteines aus dem Filter (1) beauflagt wird.

10. Filter nach Anspruch 1 **dadurch gekennzeichnet, dass** die Schlammreste (13) des jeweiligen Filtermoduls über das jeweilige Ventil (12) und dem Abfluss (11) entfernt werden.

## Claims

1. Filter for keeping any kind of fish species in a variety of keeping facilities, wherein a filter (1) is a steep-walled collection chamber (15) with a bottom drain, **characterised in that** a gridiron (9) separates the steep-walled collection chamber (15) in the bottom section of the filter (1), that a centre pressure nozzle (10) is arranged downward at the gridiron (9) and the collection chamber (15) is manufactured highly polished, wherein the filter (1) is a filter module and an optional number of modules can be combined of the filter (1).

2. Filter according to claim 1, **characterised in that** the pressure nozzle (10) realises full water flushing (14) on either side of the collection chamber (15) and dissolves sludge residues (13).

3. Filter according to claims 1 and 2, **characterised in that** the pressure nozzle (10) is connected to a water supply (2) and is actuated via a provided shut-off valve.

4. Filter according to claim 2, **characterised in that** drainage of the collection chamber (15) with dissolved sludge residues (13) is performed through the bottom drain of the shut-off valve (12) and the drain (16).

5. Filter according to claim 1, **characterised in that** the steep-walled collection chamber is made up of a partition-wall collection chamber (17) and downstream arranged collection chamber (15) that are separated by the gridiron (9) in the filter (1).

6. Filter according to claims 1 and 5, **characterised in that** a partition wall (5) is provided in the partition-wall collection chamber (17), executed from the top of the filter (1) to the gridiron (9).

7. Filter according to claims 1, 5 and 6, **characterised in that** the walls of the partition-wall collection chamber (17) and the partition wall (5) are made highly polished.

8. Filter according to claim 1, **characterised in that** in a modular construction a flange connection (7), a water supply (3) and an overflow (8) constitute the connection of the modular filter (1) components.

9. Filter according to claim 1, **characterised in that** the respective pressure nozzle (10) of a respective modular component of the filter (1) is impinged through a water supply (2).

10. Filter according to claim 1, **characterised in that** sludge residues (13) in the respective filter module are removed through the respective valve (12) and the drain (11).

## Revendications

1. Filtre pour l'élevage de poissons de toute espèce dans divers bassins d'élevage, le filtre (1) présentant une chambre de collecte (15) à parois pentues munie d'une bouche d'évacuation de fond, **caractérisé en ce qu'**une grille (9) sépare la chambre de collecte (15) à parois pentues en bas du filtre (1), une buse haute pression (10) placée sur la grille (9) est dirigée vers le bas et la chambre de collecte (15) a subi un polissage de haute qualité, le filtre (1) représentant un module de filtre et pouvant se composer d'autant de modules de filtre (1) que nécessaire.

2. Filtre selon la revendication 1, **caractérisé en ce que** la buse haute pression (10) effectue des deux côtés le nettoyage (14) de toute l'eau contenue dans la chambre de collecte (15) en détachant les boues résiduelles (13).

3. Filtre selon les revendications 1 et 2, **caractérisé en ce que** la buse haute pression (10) est reliée à une arrivée d'eau (2) et est actionnée par une vanne d'arrêt existante.

4. Filtre selon la revendication 2, **caractérisé en ce que** la vidange de la chambre de collecte (15) contenant les boues résiduelles détachées (13) s'effectue par la bouche d'évacuation de fond de la vanne d'arrêt (12) et du tuyau d'évacuation (16).

5. Filtre selon la revendication 1, **caractérisé en ce que** la chambre de collecte à parois pentues se compose d'une chambre de collecte à paroi de séparation (17) et d'une chambre de collecte (15) disposée à la suite et séparée de celle-ci par une grille (9) placée dans le filtre (1).

6. Filtre selon les revendications 1 et 5, **caractérisé en ce que** la chambre de collecte à paroi de séparation (17) comporte une paroi de séparation (5) qui s'étend du haut du filtre (1) jusqu'à la grille (9).

7. Filtre selon les revendications 1, 5 et 6, **caractérisé en ce que** les parois de la chambre de collecte à paroi de séparation (17) et de la paroi de séparation (5) ont subi un polissage de haute qualité.

8. Filtre selon la revendication 1, **caractérisé en ce que**, pour une construction modulaire, un raccord à brides (7), une arrivée d'eau (3) et un trop-plein (8) relient les composants modulaires du filtre (1) entre eux.

9. Filtre selon la revendication 1, **caractérisé en ce que** la buse haute pression respective (10) du composant modulaire constituant le filtre (1) est alimentée par une arrivée d'eau (2).

10. Filtre selon la revendication 1, **caractérisé en ce que** les boues résiduelles (13) du module de filtre respectif sont évacuées par la vanne respective (12) et le tuyau d'évacuation (11).
